# EUROPEAN PATENT APPLICATION

(11) **EP 2 085 416 A1**
(43) Date of publication of application: **05.08.2009**
(21) Application number: 08100896.3
(22) Date of filing: 24.01.2008
(51) Int. Cl.: C08G 59/56, C09D 163/00

(54) **Epoxy curing system and coatings obtained thereof**

(71) Applicant: Flexsys Holding B.V., 7418 AJ Deventer (NL)
(72) Inventor: Maslow, Wasil, 7411 EK, Deventer (NL); Breuker, Flip Theodorus, 7462 KE, Rijssen (NL)
(74) Representative: Beetz, Tom

(57) **Abstract**

The invention pertains to a peroxide-free curing system comprising 20-89.5% by weight of a compound having at least one epoxide group, 0.5 - 30% by weight of a polyamine, and 10-50% by weight of a co-curing agent, wherein the co-curing agent has formula I: 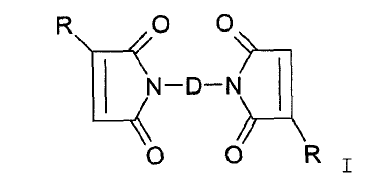 and/or its tautomeric formulae IIa and/or IIb: 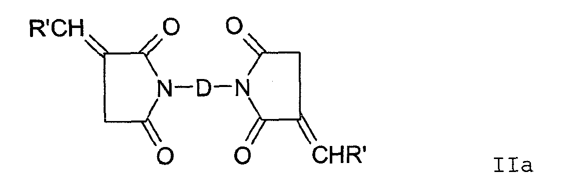 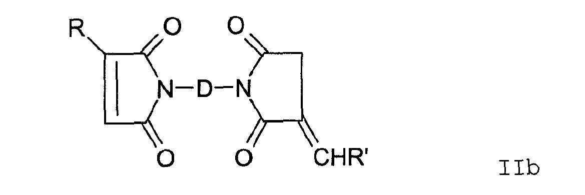 and/or formula III: 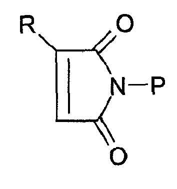 or a tautomer thereof;
and/or an oligomer thereof; wherein
D stands for branched or unbranched (CR₁R₂)ₙ or 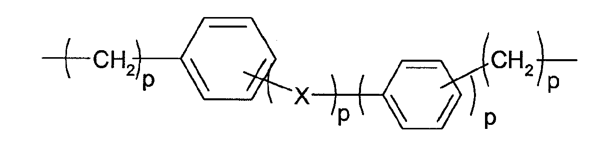 wherein p is independently 0 or 1, and X is CH₂, O, or SO₂ and 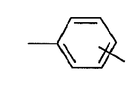 stands for a meta- or para-benzene group;
R is independently H or C1-C4 alkyl; R₁ and R₂ are independently H or (CH₂)ₘCH₃; m being 0 to 2; n being 1 to 10; and n+m is 4 to 14; R'-CH₂ is R; and P stands for phenyl, or unsubstituted or hydroxy-substituted C1-6 alkyl or C2-6 alkenyl; with the proviso that at least one of R is C1-C4 alkyl.

## Description

The invention pertains to a curing system comprising a compound having at least one epoxide group, a polyamine, and a co-curing agent. The invention also relates to a method for curing the system and to a coating obtained thereof.

Coating compositions based on compounds with epoxy groups have a limited temperature resistance, and decomposition occurs above 160 °C.

In US 5,198,515 a process was described for modifying resins having olefinically unsaturated bonds by combining with bismaleimides. According to this method polymers having a heat resistance up to 500 °C can be obtained using 1,3-bis(citraconimidomethylene)benzene. This product is available under the trade names Flexlink® and Perkalink®.

Flexlink has the chemical formula: 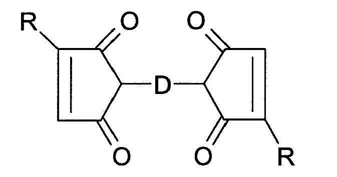 wherein D stands for 1,3-dimethylenebenzene and R is methyl.

The crosslink accelerator of this curing system is peroxide. However, for polymers having an epoxide group that are not cured in the presence of peroxide but in the present of an amine-functional compound, only low amounts of Flexlink can be used. The Flexlink content in such curing system is below about 20%, due to its limited solubility. At higher concentrations Flexlink forms sediment in the curing system.

There is a need for peroxide-free curing systems having much higher amounts of bismaleimides than possible with Flexlink. It is therefore an objective of the invention to provide such systems.

To this end the invention relates to a peroxide-free curing system comprising 20-89.5% by weight of a compound having at least one epoxide group, 0.5 - 30% by weight of a polyamine, and 10-50% by weight of a co-curing agent, wherein the co-curing agent has formula I: 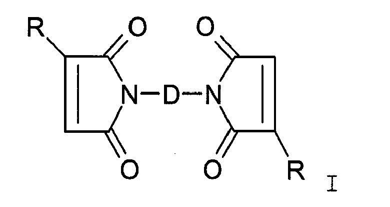 and/or its tautomeric formulae IIa and/or IIb: 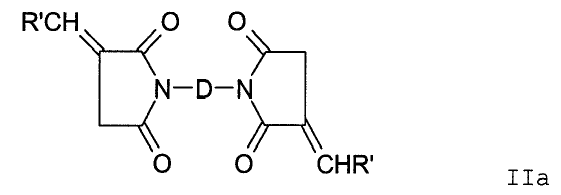 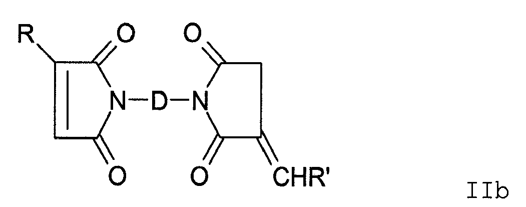 and/or formula III: 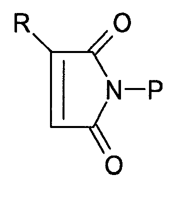 or a tautomer thereof;
and/or an oligomer thereof; wherein
D stands for branched or unbranched (CR₁R₂)ₙ or 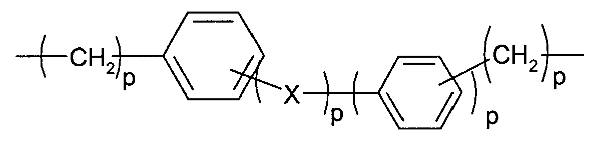 wherein p is independently 0 or 1, and X is CH₂, O, or SO₂ and 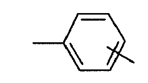 stands for a meta- or para-benzene group;
R is independently H or C1-C4 alkyl; R₁ and R₂ are independently H or (CH₂)ₘCH₃; m being 0 to 2; n being 1 to 10; and n+m is 4 to 14; R'-CH₂ is R; and P stands for phenyl, or unsubstituted or hydroxy-substituted C1-6 alkyl or C2-6 alkenyl; with the proviso that at least one of R is C1-C4 alkyl.

Examples of D are: 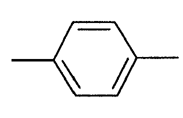 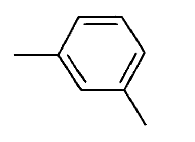 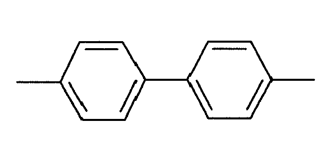 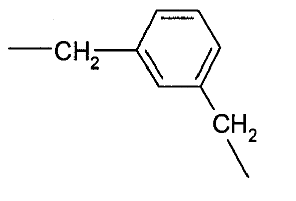 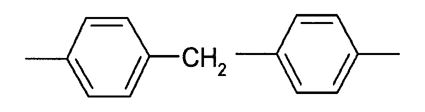 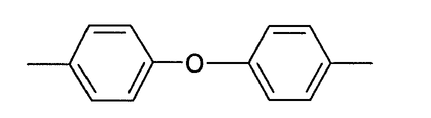 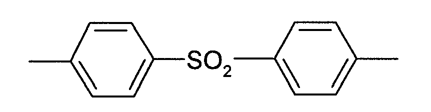 - (CH₂) ₄-; - (CH₂) ₆-; - (CH₂) ₂-CH (CH₃) - (CH₂) ₂-**;** - (CH₂) ₄-CH (CH₃) - (CH₂) ₄-; -CH₂-CH (CH₃) -CH₂-CH (CH₃) -CH₂-

The co-curing agent is a citraconimide, and one of both maleimide moieties may be in their tautomeric itaconimide form. These citraconimides (and their tautomers) can occur as depicted, but can also readily form a dimer, trimer, or higher oligomer. Where the co-curing agent citraconimide is mentioned, also its tautomers and oligomers formed from 2 up to 10 molecules of formulae I, IIa, IIb and/or III are included. The amounts by weight are based on the weight of the peroxide-free curing system.

The invention further pertains to a method for obtaining a cured polymer by heating the curing system, to a temperature and a time sufficient to co-cure the co-curing agent and the epoxide group-containing compound. In this system the polyamine may act as crosslinking agent as well as curing catalyst, and optionally other ingredients are added to the system. Such other ingredient may be monoamines that do not react as crosslinking agent, but still can be effective curing catalysts or co-catalysts.

The curing system may contain other ingredients such as nanoparticles, for instance carbon nanotubes or modified hydrotalcite, adhesion improvers, which are known compounds or compositions that improve the adhesion of the coating to a surface such as silane coupling agents, titanium coupling agents, zirconia coupling agents, aluminum coupling agents, organopolysiloxane compositions, or those described in US 4,389,432, and other additives such as dyes, pigments, and the like.
It may also be useful to use mixtures of biscitraconimide and/or bisitaconimde (I, IIa, IIb) and monomeric maleimide or itaconimide III. Mixtures of such monomers and dimers, for instance 1 to 20% monomer III by weight of the co-curing agent of the curing system, lead to cured polymers having a more flexible network. Higher amounts, up to 100% lead to very flexible to extreme flexible networks. In addition also maleimide can be used to replace part of I, IIa, IIb, and/or III. This further increases the thermal resistance of the coating and also gives unique curing possibilities, e.g. quick fixation at room temperature (predominantly citraconimide curing), optionally followed by post-hardening at elevated temperature (predominantly maleimide curing).

The curing is carried out by simply mixing a system containing at least one biscitraconimide of the formula (I), where required as a mixture with IIa and/or IIb, or (III), or a tautomer or oligomer thereof, an epoxide, polyamine, and optionally other ingredients such as monoamine, nanoparticles, and the like, optionally heating to a temperature sufficient to co-cure the (bis)citraconimide and the epoxide-containing compound and maintaining the temperature at that level for a sufficient time to cure the material into a polymeric product. Such temperature and time can easily be determined by the skilled person using routine procedures. Curing can be accomplished at 20 °C to 150 °C. Generally, the curing will be accomplished at a temperature below 130 °C, preferably at room temperature. The curing time will vary depending on the amount of polyamine and type of material present, and can easily be determined by standard analytical techniques.

Additional nitrogen-containing curing catalysts for maleimide systems may be employed such as amine-containing catalysts.

The system comprises a compound containing at least one epoxide group, but compounds having one or more epoxide groups in combination with an olefinically unsaturated, isocyanate, or urethane group can also be used.

Examples of co-curing agents are known from US 5,198,515, but none of these generically mentioned compounds are disclosed to be suitable in the peroxide-free epoxy-containing compound curing systems of this invention.

Flexlink® has the chemical name 1,3-bis(citracon-imidomethylene)benzene and is available from Flexsys, Brussels, Belgium. Lowering the melting point of Flexlink by isomerization (tautomerization) provides a modified Flexlink and improves the solubility of this product in a stable formulation for room temperature curing applications. Instead of less than 10-20% of Flexlink more than 25% of this modified Flexlink can dissolve in epoxy-modified 2K (two component) curing systems at room temperature without forming sediment on storage. A solvent-free room temperature compatible stable 2K system is then obtained. This means that it is a prerequisite for obtaining higher concentrations of Flexlink in a stable formulation to tautomerize Flexlink. Optionally, also an appropriate reactive or non-reactive solvent can be added.

A particularly suitable biscitraconimide has formula I wherein D is a branched C₆-alkylene group, which is liquid at room temperature. For this reason this molecule can even be used as such without isomerization in very high concentrations (>50%). Isomerization will further increase the solubility. These aliphatic citraconimides give clear coatings and are color stable and resistant to outdoor conditions like UV. To obtain clear coatings from commercial Flexlink the standard available grade has to be recrystallized.

Tautomerized Flexlink in combination with compounds having reactive epoxides, glycidyl ethers, and glycidyl esters such as Epikote 827/828 and Epikote 1001 (available from Hexion Specialty Chemicals, Columbus, OH, USA) or Thioplast® EPS (manufacturer Akzo Nobel, the Netherlands) can be used.

Conventional commercially available 2K systems based on epoxy resins can be heated to at most 160 °C. At higher temperature these curing systems decompose. Addition of modified Flexlink into such formulations improves the heat resistance and stability. With modified citraconimide formulations high temperature resistance up to 250 °C can be obtained, while curing can be done at room temperature. The melting point of the modified (tautomerized) citraconimide Flexlink (having a citraconimide: itaconimide ratio of approximately 45: 55) is about 60-70 °C. Unmodified citraconimide which is commercially available as Flexlink® (having a citraconimide: itaconimide ratio of approximately 95:5) has a melting point of about 90 °C. Preferably the citraconimide contains 6 to 50% of one or two of the tautomeric itacon isomers.

Apart from improved heat resistance the coating obtained from the present curing system also shows improved chemical and scratch resistance and auto repairing properties.

The curing system also contains a polyamine. These act as accelerators and/or as co-monomer. Suitable polyamines are compounds having at least two primary and/or secondary amino groups, as well as mixtures of such polyamines. Also amine-containing oligomers and polymers can be used, such as commercially available Aradur® (ex. Huntsman, Salt Lake City, USA), and other nitrogen-containing basic molecules. The curing systems of the present invention allow high concentration of co-curing agent, which should be at least 10% of the composition, but can easily be up to 50%. Further examples of polyamines are given in the experimental part.

The citraconimides of the invention give clear coatings and are color stable and resistant to outdoor conditions like UV. Addition of the co-curing agents in high concentration leads to improving the heat resistance and stability, whereas this improvement increases with higher amounts of co-curing agent in the system.

On adding nano-particles such as modified hydrotalcite auto-topographic 3D landscape formation was observed on various substrates. This can be attractive for decorative applications. Also scratch resistance and anti-slip was improved. The layer thickness of the coating is variable within 50 micron up to several millimeters. The thicker the layer the more pronounces the esthetic effect obtained.

The compositions of the invention can be applied onto a variety of surfaces, among which soft and hard wood, artificial wood, such as multiplex and the like, glass, aluminum, stainless steel, iron, plastics like PVC, polycarbonate, polyesters, polyamides, polyethylene and polypropylene, concrete, stone, latex surfaces, conventional paint surface, natural and synthetic fibers like aliphatic and aromatic polyamide, polyester, cotton, and the like.

Applications for the new coating compositions are clear coatings, adhesives, sealants, fillers, and combinations thereof.

The invention will be further described with reference to the following examples which are not to be construed as limiting the scope of the invention.

### Example 1

### General method for modifying Flexlink

Commercially available Flexlink® (ex Flexsys, Belgium) was mixed with a weak base N-phenyl imidazole (or any other weak base) used as a catalyst (concentration range of 0.05-5% m/m), preferably with 0.1-3.0% m/m, and most preferably with 0.5-1.0% m/m, heated in an oven for approximately 10-20 hours at approximately 130 °C or 3-4 hours at 140 °C. The higher the temperatures higher amounts of oligomerized homo (pre)polymer were formed.

As curing agent various types of amines can be used. For very fast curing times small amines like ethylenediamine (EDA), diethylenetriamine (DETA), triethylenetetramine (TETA), tetraethylenepentamine (TEPA), pentamethylenehexamine (PEHA), and the like, and functionally similar homologues or derivatives can be used.

### Example 2

### Fast curing system 2K system

Mixture 1: 15 grams of tautomerized Flexlink were molten in an oven (70-90 °C) and mixed with 15 grams of an epoxy curing agent (Epikote 827/828 or 1001) and homogenized. Optional 0.5 to 3 grams of a coupling agent such as trialkoxy glycidyl silane were added to this mixture for improving adhesion on metal surfaces.

Mixture 2: In another cup 15 grams of TEPA were prepared.

Both mixtures were mixed with each other. An exothermic reaction occurred (>100 °C). During this heating period also a certain amount of Flexlink was tautomerized. Within several minutes this coating system can be applied as a thin layer coating, a filler, a liner, or as adhesive onto a surface like wood, metal or the like. These 2K systems can also be sprayed and mixed in a nozzle for professional applications.

If more elasticity is required in the final curing system, 2-5 grams of Thioplast® EPS can be added, and/or less of epoxy can be used (for instance 13-10 grams instead of 15 grams).

If a long operating time is required, for instance hours instead of minutes, more fatty amine derivative (such as a Duomeen® homologue; manufacturer: Akzo Nobel) and less EDA or homologue thereof should be added.

The coupling agent can also be applied separately by first activating the metal surface with caustic soda (by a washing procedure) and thereafter degreasing the surface together in the presence of the coupling agent. In that case the coupling agent is specifically present for adhesion of the metal to the coating.

### Example 3

### Slow curing 2K system

Mixture 1: 15 grams of tautomerized Flexlink were molten in an oven (70-90 °C), mixed with 15 grams of an epoxy curing agent (Epikote 827/828 or 1001), and homogenized.

Optionally 0.5 to 3 grams of a coupling agent were added to this mixture for improved adhesion (such as trialkoxy glycidyl silane) on metal surfaces.

Mixture 2: In another cup 15 grams of coco propylenediamine (Duomeen CD), or other Duomeen types (homologues of monosubstituted propylenediamines) were prepared. Both mixtures were mixed with each other. A slight exothermic reaction occurred, whereby the temperature increased to approximately 30-50 °C.

The operating time is at least several hours for applying this coating system as a thin layer coating onto a surface like wood, metal, or another material, as filler, liner, or as adhesion. After 10-15 hours drying at room temperature the system was hardened. These 2K systems also can be sprayed and mixed in a nozzle for professional applications.

If more elasticity is required in the final curing system 2-5 grams of Thioplast EPS can be added, and/or less of epoxy can be used (for instance 13-10 grams instead of 15 grams).

If a shorter operating time is required, for instance half an hour instead of several hours, for instance TETA can be added and less of the Duomeen homologue.

The coupling agent can also be applied separately by first activating the metal surface with caustic soda (by a washing procedure) and thereafter degreasing the surface together in the presence of the coupling agent. In that case the coupling agent is specifically present for adhesion of the metal to the coating.

If water repelling properties (anti-corrosion and the like) are needed then fatty (poly)amines and derivatives can be used. A variety of amines were tested and good results were obtained with Duomeen®, tri- and linear and branched Tetrameen® (monosubstituted tripropylenetetramines, manufacturer Akzo Nobel)).

By applying combinations of different amines, such as short amines and fatty amines, the curing time is tunable. Jeffamines (polyoxyalkyleneamines), dendrimers and/or polyamino amides may also be used.

### Example 4

### Nano technology application for a three dimensional auto topographic landscape formation

The composition of Example 3 used as basic formulation.

In mixture 1 (the imide/epoxy part) additionally 0.1-10% m/m, preferably 0.5-5%,m/m, and most preferably 1-4% m/m modified hydrotalcite F100 were added and thoroughly mixed. 4 grams of HTC F100 were added to mixture 1.

This mixture 1 was aged for at least half an hour to defoliate before mixing with mixture 2.

This mixture with an operating time of several hours was coated on metal (aluminum or stainless steel), wood, concrete, or other surface.

On standing (drying) at room temperature for 5-10 hours the auto topographic landscape was automatically formed. After 24 hours a dry three dimensional clear coating was obtained having a crocodile look. Optionally 0.1-1% of a dye or 20-30% of a pigment can be added and used for providing esthetic colors. The color body is predominantly concentrated on the islands and far less on the streets. This means that also an esthetic color distribution and separation are obtained.

## Claims

1. A peroxide-free curing system comprising 20-89.5% by weight of a compound having at least one epoxide group, 0.5 - 30% by weight of a polyamine, and 10-50% by weight of a co-curing agent, wherein the co-curing agent has formula I: 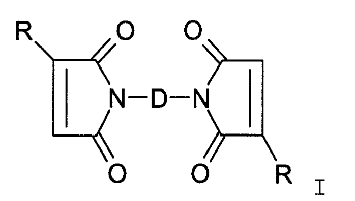 and/or its tautomeric formulae IIa and/or IIb: 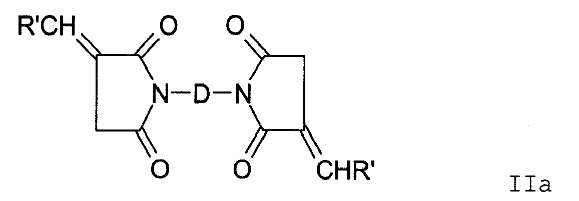 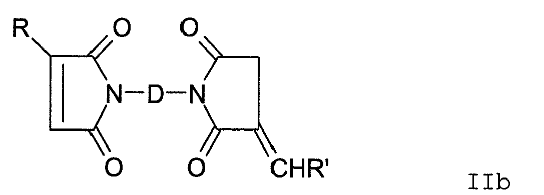 and/or formula III: 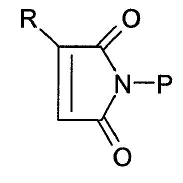 or a tautomer thereof;
and/or an oligomer thereof; wherein
D stands for branched or unbranched (CR₁R₂)ₙ or 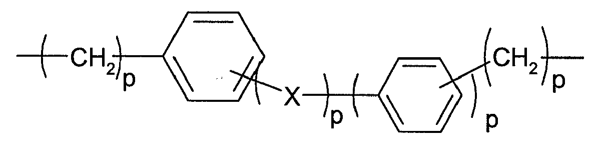 wherein p is independently 0 or 1, and X is CH₂, O, or SO₂ and 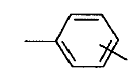 stands for a meta- or para-benzene group;
R is independently H or C1-C4 alkyl; R₁ and R₂ are independently H or (CH₂)ₘCH₃; m being 0 to 2; n being 1 to 10; and n+m is 4 to 14; R'-CH₂ is R; and P stands for phenyl, or unsubstituted or hydroxy-substituted C1-6 alkyl or C2-6 alkenyl; with the proviso that at least one of R is C1-C4 alkyl.

2. The curing system of claim 1 wherein 6-50% of the co-curing agent has formulae IIa and/or IIb.

3. The curing system of claim 1 comprising 20-40% by weight of the composition of the co-curing agent.

4. The curing system of any one of claims 1 to 3 wherein the co-curing agent has moiety D which stands for a branched C6-alkylene group, or wherein the co-curing agent is 1,3-bis(citraconimidomethyl)benzene.

5. The curing system of any one of claims 1 to 4 further comprising nanoparticles and/or an adhesion improver.

6. A coating comprising a crosslinked polymer obtainable from the curing system of any one of claims 1 to 5 wherein the compound having at least one epoxide group is crosslinked by the polyamine.

7. A method for curing the curing system of any one of claims 1 to 5, by heating the curing system to a temperature and for a time sufficient to co-cure the co-curing agent, the compound having at least one epoxide group, and the polyamine.

8. The method according to claim 7 wherein the curing is performed at a temperature lower than 130 °C.

9. The method according to claim 8 wherein the curing is performed at room temperature.
